# EUROPEAN PATENT APPLICATION

(11) **EP 2 128 087 A1**
(43) Date of publication of application: **02.12.2009**
(21) Application number: 08751812.2
(22) Date of filing: 18.03.2008
(51) Int. Cl.: C01B 31/30, C01B 31/34, C01G 33/00, C01G 39/00, C01G 41/00, C01G 49/00

(54) **PROCESS FOR PRODUCTION OF TRANSITION METAL CARBIDES AND/OR DOUBLE CARBIDES**

(30) Priority: 26.03.2007 JP 2007079373
(71) Applicant: JFE Mineral Company, Ltd., Minato-ku Tokyo 105-0014 (JP); Tohoku University, Aoba-ku Sendai-shi Miyagi 980-8577 (JP)
(72) Inventor: SUGINOBE, Hidetaka, Chiba-shi Chiba 260-0826 (JP); SHIOKAWA, Takahiro, Chiba-shi Chiba 260-0826 (JP); SATO, Nobuaki, Sendai-shi Miyagi 980-8577 (JP); SAITO, Fumio, Sendai-shi Miyagi 980-8577 (JP); SUZUKI, Shigeru, Sendai-shi Miyagi 980-8577 (JP); KANO, Junya, Sendai-shi Miyagi 980-8577 (JP)
(74) Representative: HOFFMANN EITLE
(86) International application number: PCT/JP2008/055630
(87) International publication number: WO 2008/123268

(57) **Abstract**

To simultaneously overcome a drawback in that proceeding of a solid phase carbonization reaction requires high temperature and a drawback in that the reaction requires use of expensive materials. A method for producing a carbide of a Group IVA, VA, or VIA transition metal in the periodic table and/or a composite carbide of the transition metal and iron, the method including the step of co-milling a ferroalloy containing a Group IVA, VA, or VIA transition metal in the periodic table and incidental impurities and a carbon material mainly composed of carbon in a vacuum or an atmosphere of an inert gas to effect a solid phase reaction between the ferroalloy and the carbon material.

## Description

### Technical Field

The present invention relates to a method for producing carbides of transition metals and/or composite carbides of transition metals.

### Background Art

Carbides of Group IVA, VA, and VIA transition metals in the periodic table (hereinafter, referred to as carbides of transition metals) and composite carbides of the transition metals and iron (hereinafter, referred to as composite carbides) have extremely high hardness and hence fine particles of the carbides of transition metals and/or the composite carbides of transition metals are suitable as materials for cutting tools. Known examples of the composite carbides include types represented by (M, Fe)₃C, (M, Fe)₂₃C₆, (M, Fe)₇C₃, (M, Fe)₂C, and (M, Fe)₆C. Examples of hardness (HV) of these carbides of transition metals and composite carbides of transition metals are as follows. Fe₃C has a hardness of 1150 to 1340 HV. (Fe, Cr)₂₃C₆ has a hardness of 1000 to 1520 HV. (Fe, Cr)₇C₃ has a hardness of 1820 HV. MO₂C has a hardness of 1800 to 2200 HV. W₂C has a hardness of 3000 HV. Fe₄MO₂C₃ has a hardness of 1670 HV. Single carbides such as MoC, WC, VC, and TiC have a hardness of 2250 to 3200 HV (NACHI-BUSINESS news vol. 8 D1 page 6: retrieved on August 6, 2006 from a URL of http://www.nachifujikoshi.co.jp/tec/pdf dev.html).

The carbides of transition metals and the composite carbides of transition metals have been typically produced by mixing and molding powder of transition metals or transition metal oxides and fine particles of carbon materials substantially mainly composed of carbon, such as graphite, activated carbon, or coke (hereinafter, simply referred to as carbon materials), and subsequently heating the resultant molded products in a non-oxidizing atmosphere or a reducing atmosphere at high temperatures for many hours to effect reaction between the transition metals or the transition metal oxides and the carbon materials. Since this reaction is a solid phase reaction between transition metals or transition metal oxides having high melting points and carbon materials, proceeding of the reaction requires heating of the transition metals or the transition metal oxides and the carbon materials to high temperatures. For example, production of a composite carbide from tungsten powder as the main material and other transition metals requires holding these materials at 1350°C to 1450°C for an hour (Example of Japanese Unexamined Patent Application Publication No. 10-273701). NbC is produced by mixing niobium oxide and a carbon material, and subjecting the resultant mixture to a first treatment under a hydrogen gas atmosphere at 1400°C to 1800°C, and subsequently to a second treatment at 1800°C to 2000°C (Japanese Unexamined Patent Application Publication No. 2000-44243).

Powders of transition metals or transition metal oxides have been mainly used as the materials. However, since these materials are produced by subjecting ores to complex and various steps mainly constituted by wet smelting, these materials have an economic drawback of high cost. For example, a tungsten powder material for WC is produced by preparing a solution of ammonium tungstate from tungsten ore, adding hot acid to the solution to precipitate tungstic acid, and subjecting the resultant precipitate to hydrogen reduction (Japanese Unexamined Patent Application Publication No. 61-73801). The step of preparing a solution of ammonium tungstate from tungsten ore is specifically conducted by subjecting the tungsten ore and a solution of soda ash to autoclaving under conditions of 200°C to 250°C and 225 to 575 psig (1.6 to 4.0 MPa) to provide a solution of sodium tungstate (Japanese Unexamined Patent Application Publication (Translation of PCT Application) No. 58-500021), subsequently subjecting the solution to various processes such as removal of impurities, and subsequently converting the sodium tungstate into ammonium tungstate. Not only use of tungsten but also use of transition metals that are produced by wet smelting or other special smelting as an initial process of the production and use of oxides of the transition metals have an economic drawback of high material costs.

An object of the present invention is to simultaneously overcome existing drawbacks, that is, a drawback in that proceeding of a solid phase carbonization reaction requires high temperature and a drawback in that the reaction requires expensive materials as a transition metal source.

### Disclosure of Invention

To achieve the object, the present invention includes the following features.
(1) A method for producing a carbide of a Group IVA, VA, or VIA transition metal in the periodic table and/or a composite carbide of the transition metal and iron, the method including the step of co-milling a ferroalloy containing a Group IVA, VA, or VIA transition metal in the periodic table and incidental impurities and a carbon material mainly composed of carbon in a vacuum or an atmosphere of an inert gas to effect a solid phase reaction between the ferroalloy and the carbon material.
(2) A method for producing a carbide of a Group IVA, VA, or VIA transition metal in the periodic table and/or a composite carbide of the transition metal and iron, the method including the steps of: co-milling a ferroalloy containing a Group IVA, VA, or VIA transition metal in the periodic table and incidental impurities and a carbon material mainly composed of carbon in a vacuum or an atmosphere of an inert gas to effect a solid phase reaction between the ferroalloy and the carbon material; reducing cementite into metal iron with a reducing gas, the cementite being generated as a by-product in the solid phase reaction caused by the co-milling; and separating and removing the resultant metal iron from a product of the solid phase reaction by dissolving the metal iron in an acid.
(3) The method for producing a carbide of the transition metal and/or a composite carbide of the transition metal and iron according to Claim (1) or (2), wherein the transition metal is vanadium, niobium, tantalum, chromium, molybdenum, or tungsten.
(4) The method for producing a carbide of the transition metal and/or a composite carbide of the transition metal and iron according to any one of Claims (1) to (3), wherein the carbon material is graphite, activated carbon, or coke.
(5) The method for producing a carbide of the transition metal and/or a composite carbide of the transition metal and iron according to any one of Claims (1) to (4), wherein a molar ratio of the carbon material to the ferroalloy is 0.16 to 1.5 in the co-milling.
(6) The method for producing a carbide of the transition metal and/or a composite carbide of the transition metal and iron according to any one of Claims (1) to (5), wherein the co-milling is conducted with a grinding machine that provides an acceleration of 5 G or more.
(7) The method for producing a carbide of the transition metal and/or a composite carbide of the transition metal and iron according to any one of Claims (2) to (6), wherein hydrogen gas is used as the reducing gas and the cementite is reduced into the metal iron at a temperature of 700°C to 900°C.

### Brief Description of Drawings

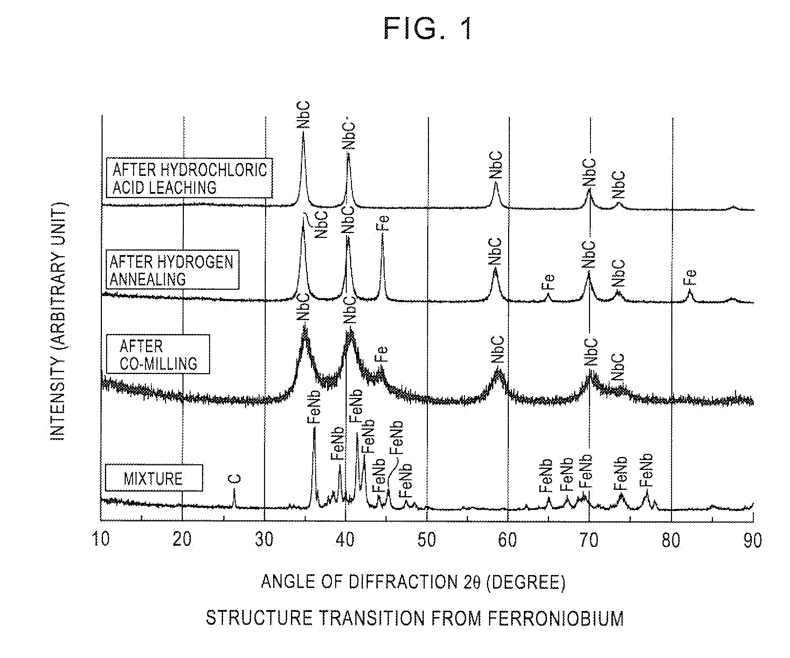

Fig. 1 shows X-ray diffraction patterns of a product obtained by co-milling ferroniobium and graphite, a product obtained by subjecting the co-milled product to a hydrogen anneal, and filtration residue obtained after leaching this product with hydrochloric acid in EXAMPLE 1 of the present invention, and a simple mixture of ferroniobium and graphite.

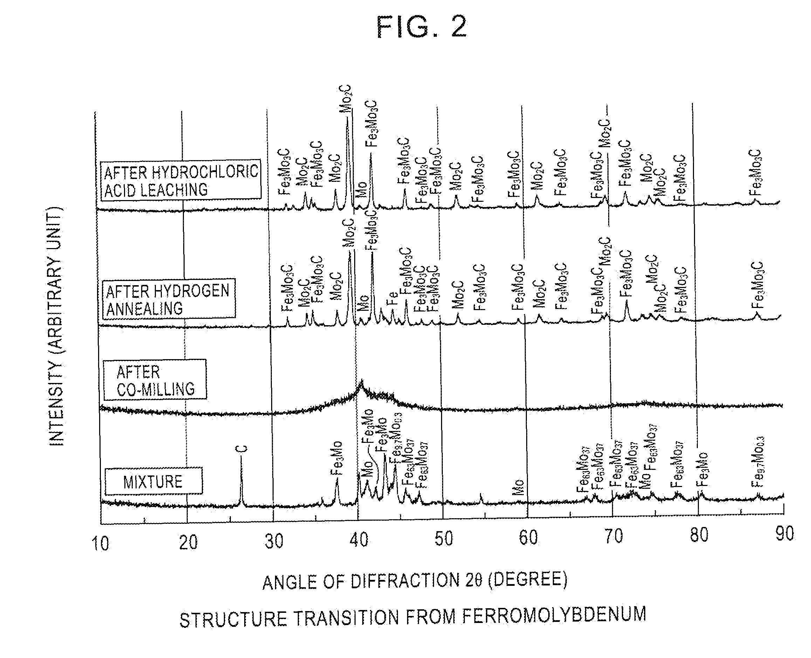

Fig. 2 shows X-ray diffraction patterns of a product obtained by co-milling ferromolybdenum and graphite, a product obtained by subjecting the co-milled product to a hydrogen anneal, and filtration residue obtained after leaching this product with hydrochloric acid in EXAMPLE 2 of the present invention, and a simple mixture of ferromolybdenum and graphite.

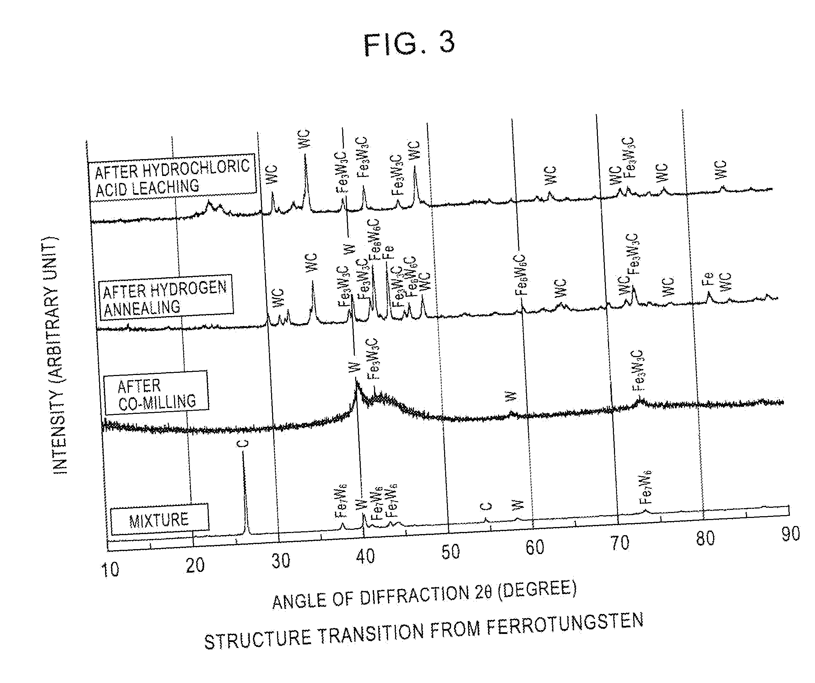

Fig. 3 shows X-ray diffraction patterns of a product obtained by co-milling ferrotungsten and graphite, a product obtained by subjecting the co-milled product to a hydrogen anneal, and filtration residue obtained after leaching this product with hydrochloric acid in EXAMPLE 3 of the present invention, and a simple mixture of ferrotungsten and graphite.

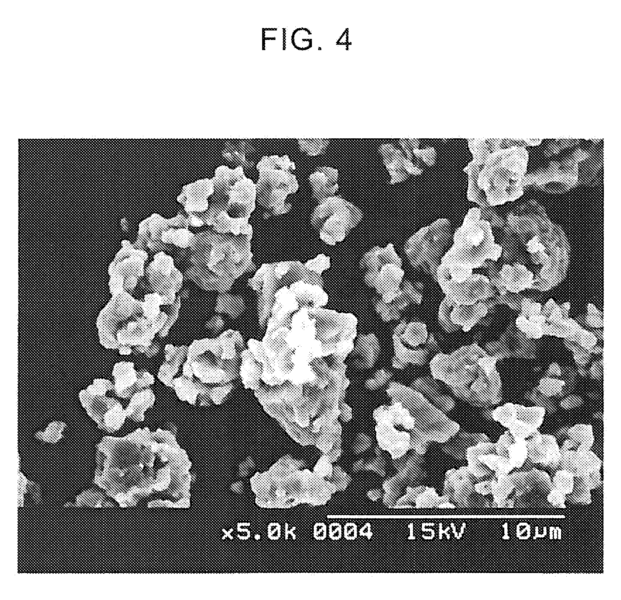

Fig. 4 shows an image of filtration residue observed with a scanning electron microscope, the filtration residue being obtained by subjecting a co-milled product of ferroniobium and graphite to a hydrogen anneal and subsequently to leaching with hydrochloric acid in EXAMPLE 1 of the present invention.

### Modes for Carrying Out the Invention

The present invention provides a method for producing a carbide of a Group IVA, VA, or VIA transition metal in the periodic table and/or a composite carbide of the transition metal and iron, the method including the step of co-milling a ferroalloy containing a Group IVA, VA, or VIA transition metal in the periodic table and incidental impurities and a carbon material substantially mainly composed of carbon such as graphite, activated carbon, or coke in a vacuum or an atmosphere of an inert gas to effect a solid phase carbonization reaction between the ferroalloy and the carbon material.

Ferroalloys of transition metals that are used in the present invention are ferroalloys of titanium, zirconium, and hafnium (Group IVA), vanadium, niobium, and tantalum (Group VA), chromium, molybdenum, and tungsten (Group VIA), and the like. These ferroalloys have higher compatibility with carbon than with iron. For this reason, when there are ferroalloys of the transition metals together with carbon, generation of carbides is more thermodynamically stable than the state where the ferroalloys and carbon exist individually even at low temperature. However, the generation reaction of carbides is a solid phase reaction that requires high temperature to proceed in existing techniques. Thus, diffusion of atoms substantially does not occur at low temperature and hence carbides are not generated.

In general, ferroalloys contain incidental impurities derived from materials or introduced by production methods. For example, examples of incidental impurities derived from material in ferroniobium include Si, Cr, and Mn contained in niobium ore serving as the material. When a ferroalloy is produced by aluminothermic reduction, an example of incidental impurities introduced by production methods is aluminum (Table 1). An example of incidental impurities derived from material in ferromolybdenum is copper contained in ore serving as the material (Table 3).

In view of the consideration described above, the inventor of the present invention has selected co-milling as a technique for allowing the reaction to proceed at low temperature. The inventor thinks that, when a ferroalloy and a carbon material are co-milled and an impact force applied to a micro impact surface exceeds a certain threshold required for a mechanochemical reaction, this reaction occurs at the impact surface and, as a result, carbide is generated. Although the amount of carbide generated in a single impact is small, continuation of co-milling results in the occurrence of the reaction at new impact surfaces and, as a result, substantially the total amount of the transition metal is converted into carbide. In this case, the presence of an oxidizing substance in the atmosphere causes oxidation of iron, transition metal, and carbon. This inhibits efficient generation of carbide. For this reason, the co-milling must be conducted in a vacuum or an atmosphere of an inert gas. Examples of the inert gas include nitrogen and argon. The vacuum in the present invention is at 8,000 Pa or less, preferably 1,000 Pa or less.

A ferroalloy used as a material in the present invention is an alloy of a transition metal and iron. Examples of the ferroalloy include ferrotitanium, ferrozirconium, ferrovanadium, ferroniobium, ferrochromium, ferromolybdenum, and ferrotungsten. Preferred ferroalloys are ferroalloys of the Group VA and VIA metals. Particularly preferred ferroalloys are ferroalloys of niobium, molybdenum, and tungsten. The ferroalloys may also be used in combination.

Ferroalloys of transition metals serving as materials in the present invention are economically advantageous over transition metals and transition metal oxides serving as materials in existing techniques. This is because ferroalloys are produced by carbon reduction or thermite reaction with electric furnaces and ores are used as the materials of ferroalloys. For example, according to the third edition of Tekko Binran II, "Iron Making and Steel Making", ferrochromium is produced by reducing chromium ore in an electric furnace (page 414), ferroniobium is produced by reducing niobium ore by thermite reaction (page 429), and ferrotungsten is produced by reducing tungsten ore such as wolframite with carbon in an electric furnace (pages 429 to 430).

It is preferred that a carbon material used in the present invention be substantially mainly composed of carbon or graphite such as graphite, activated carbon, or coke. These carbon materials may also be used in combination. For graphite, natural graphite or artificial graphite may be used.

The present invention uses a mechanochemical reaction between a ferroalloy of transition metal M and carbon, the reaction being caused by the impact of co-milling of the ferroalloy and a carbon material. The simplest example of the reaction is represented by the following reaction formula.

FeM + C → Fe + MC

To effect the reaction, required energy equal to or higher than a certain threshold must be applied by impact. To allow the reaction to proceed efficiently in a short time, enhancement of impact energy is effective. Thus, a grinding machine is used that provides an acceleration of 1 G (natural gravity) or more, preferably an acceleration of 5 G or more. Use of a vibration mill or a planetary mill is industrially preferable. A grinding machine that uses natural gravity (1 G) such as a ball mill is advantageous in that the structure thereof is simple and inexpensive. However, such a grinding machine generally provides a small impact force and hence the reaction proceeds slowly. A grinding machine should be selected from the economic standpoint such as productivity or the cost of equipment. The upper limit of required impact energy depends on the specifications of a grinding machine and is not particularly restricted.

The particle size of a ferroalloy and a carbon material to be charged into a grinding machine is not particularly restricted. However, to effect the reaction uniformly in a short time, the whole of a ferroalloy and a carbon material is preferably ground in advance to have an average particle size of 3 mm or less. As a result of co-milling, the resultant product has an average particle size of 10 µm or less, generally 5 µm or less.

The co-milling is required to be conducted in a closed system and in a vacuum or in a closed system filled with an inert gas such as argon for the purpose of preventing oxidization of charges. Even in a closed system, vacuum is not sometimes maintained because entry of a small amount of air from outside cannot be prevented. In this case, the ambient atmosphere of the closed system is preferably an atmosphere of an inert gas. After the reaction is complete, it is preferred that the closed system be left until the temperature of the closed system that has increased by the co-milling sufficiently decreases and the ambient atmosphere of the closed system be an atmosphere of an inert gas. After that, the closed system is opened and the reaction product is taken out from the closed system.

The amount of a carbon material to be added in the co-milling is preferably 1 to 1.5 times the theoretical equivalent required to generate a target carbide. An amount of carbon equal to or less than the theoretical equivalent is not preferable because an unreacted ferroalloy, which is not dissolved and removed by acid, remains and hence carbide is collected together with the unreacted ferroalloy, thereby decreasing the purity of the carbide. In contrast, excessive carbon is used to generate cementite as a by-product. In the case of reducing the cementite into metal iron and dissolving the metal iron in acid to remove the metal iron and collect composite carbide, the reduction requires a large amount of hydrogen and the time required until the reduction is complete is long. Thus, excessive carbon is not preferable.

The mixing molar ratio of the carbon material to the ferroalloy varies in accordance with the type of the ferroalloy, the content of transition metal, the type of the carbon material, or the like. However, the mixing molar ratio is determined as follows. Since the type of carbide in the present invention is (M, Fe)₃C, (M, Fe)₂₃C₆, (M, Fe)₇C₃, (M, Fe)₂C, (M, Fe)₆C, or MC, the theoretical ratio of C to transition metal in a ferroalloy is in the range of 1/6 to 1/1. As described above, since 1 to 1.5 times the theoretical equivalent is preferred, the mixing molar ratio is in the range of 0.16 to 1.5.

In the solid phase reaction, although the compatibility of iron with carbon is lower than that of transition metals in view of thermodynamics, by-products such as carbide of iron (cementite, Fe₃C) are necessarily generated. Cementite belongs to a carbide group having the lowest hardness among carbides and is chemically unstable. Thus, to obtain carbide that is stable and has high hardness, cementite generated as a by-product is preferably separated and removed from the product of the solid phase reaction.

The cementite generated as a by-product can be reduced into metal iron by being heated in a reducing gas. Examples of the reducing gas include hydrogen gas and carbon monoxide gas, and hydrogen gas is preferred. When hydrogen gas is used, reduction into metal iron can be achieved at 700°C to 900°C, preferably at 750°C to 850°C. Temperatures lower than 700°C are not preferable because the reduction reaction proceeds slowly. At temperatures higher than 900°C, granular carbon is generated by the following thermal decomposition reaction.

Fe₃C → 3Fe + C

When metal iron is dissolved in acid, this granular carbon in the state of a solid enters carbide. For this reason, temperatures higher than 900°C are not preferable. Also in this reduction step, to prevent oxidation of metal iron, it is preferred that care be taken not to expose the metal iron to an oxidizing atmosphere such as air throughout a temperature increasing step, a temperature maintaining step, and a temperature decreasing step; and apparatuses, devices, pipes, and the like be sufficiently cooled before the next step is conducted.

The resultant metal iron is readily dissolved in acid such as diluted hydrochloric acid. Thus, known methods will suffice for, after the reduction step, dissolving metal iron in acid and separating and removing the metal iron from carbide. For example, metal iron is readily dissolved in warmed diluted hydrochloric acid by stirring the metal iron in the diluted hydrochloric acid and hence carbide having a low content of by-products can be collected as an undissolved residue.

For the acid, diluted hydrochloric acid is preferred. For the amount of the acid, an amount with which metal iron can be dissolved will suffice and hence an excessive amount is not necessary.

Collected carbide is, if necessary, subjected to rinsing with water, drying, or adjustment of particle size to form fine particles having an average particle size of, for example, 2 to 13 µm, preferably 0.4 to 0.8 µm. Thus, the fine particles are used as materials for cutting tools.

### EXAMPLES

Hereinafter, the present invention is specifically described with reference to examples.

Ferroalloys serving as materials were subjected to ultimate analysis with a fluorescent X-ray spectrometer (manufactured by SHIMADZU CORPORATION, XRF-1700). Co-milled products (including co-milled products subjected to a hydrogen anneal and co-milled products subjected to hydrochloric acid leaching) were measured for X-ray diffraction with an X-ray diffractometer (manufactured by Rigaku Denki Co., Ltd., Rigaku RINT/2200/PC).

### [EXAMPLE 1]

A stainless steel pot (diameter: 4 cm, height: 4 cm) of a planetary mill (manufactured by Fritsch GmbH) was charged with 4.7 g of ferroniobium that had a composition shown in Table 1 and was grounded in advance such that the total amount of the ferroniobium passed through a sieve opening of 1 mm, and 0.5 g of graphite having an average particle size of 0.21 mm. A molar ratio C/Nb is calculated as 1.29 from the content of Nb.

**Table 1**

| Element | Fe | Nb | Al | Si | Cr | Mn |
|---|---|---|---|---|---|---|
| Ferroniobium material (mass%) | 35.2 | 63.8 | 0.3 | 0.4 | 0.08 | 0.22 |

Seven stainless steel balls (diameter: 15 mm) were put into the pot. After that, the atmosphere of a glove box housing the whole planetary mill was replaced with argon gas in advance. Next, co-milling was conducted at the number of revolutions of 700 rpm for 120 min while argon gas was fed to the glove box at a flow rate of 20 ml/min. The temperature of the outer surface of the pot immediately after the co-milling was 80°C. The pot was allowed to cool naturally to 30°C. After that, the pot was opened in the atmosphere of argon gas and a co-milled product was taken out.

The measurement result of the co-milled product in terms of X-ray diffraction is shown as the second chart from the bottom in Fig. 1 (abscissa: angle of diffraction, ordinate: diffracted intensity). For comparison, the measurement result of a simple mixture of ferroniobium and graphite in the same proportions as in the material charged into the pot in terms of X-ray diffraction is also shown at the bottom part of Fig. 1. Fig. 1 shows that a solid phase reaction proceeded, so that ferroniobium and graphite disappeared and the total amounts of the ferroniobium and graphite were converted into NbC and Fe.

In a silica-glass tube furnace, 2.5 g of the co-milled product (sample) was held at 800°C for 2 hours while hydrogen gas was fed to the furnace. After that, the heater was turned off and the hydrogen gas was continuously fed until the sample was at 30°C or less. The measurement result of the sample in terms of X-ray diffraction is shown as the third chart from the bottom in Fig. 1. Only the peaks of NbC and Fe were observed. This shows that cementite was reduced into Fe.

Further, 0.5 g of the sample that had been subjected to the hydrogen anneal was put into 100 ml of 0.1 N hydrochloric acid, stirred at 50°C for 2 hours and filtered. The filtration residue was washed with pure water and dried. The measurement result of this sample in terms of X-ray diffraction is shown as the uppermost chart in Fig. 1. This chart shows that Fe was removed and substantially pure NbC remained.

The compositions of Fe, Nb, and C in the co-milled product and in the filtration residue obtained after the hydrochloric acid leaching are shown in Table 2. Table 2 shows that Fe that was present after the co-milling was removed by the hydrogen anneal and the hydrochloric acid leaching and hence NbC that had a small C/Nb molar ratio and high purity was obtained.

**Table 2**

| Element | Fe | Nb | C | C/Nb |
|---|---|---|---|---|
| Co-milled product (mass%) | 30.85 | 58.94 | 9.85 | 1.29 |
| Filtration residue obtained after hydrochloric acid leaching (mass%) | 0.06 | 85.14 | 11.12 | 1.01 |

| | | | | |
|---|---|---|---|---|
| C/Nb is represented by a molar ratio. | | | | |

Fig. 4 shows an image of the filtration residue observed with a scanning electron microscope. The image shows fine NbC particles having a size on the submicron order to micron order and hence the filtration residue is suitable as a material for cutting tools.

### [EXAMPLE 2]

A stainless steel pot (diameter: 4 cm, height: 4 cm) of a planetary mill (manufactured by Fritsch GmbH, Germany) was charged with 4.6 g of ferromolybdenum that had a composition shown in Table 3 and was grounded in advance such that the total amount of the ferromolybdenum passed through a sieve opening of 1 mm; and 0.5 g of graphite having an average particle size of 0.21 mm. A molar ratio C/Mo is calculated as 1.4 from the content of Mo.

Seven stainless steel balls (diameter: 15 mm) were put into the pot. After that, the atmosphere of a glove box housing the whole planetary mill was replaced with argon gas. Next, co-milling was conducted at the number of revolutions of 700 rpm for 90 min while argon gas was fed to the glove box at a flow rate of 20 ml/min. The temperature of the pot immediately after the co-milling was 70°C. The pot was allowed to cool naturally to 25°C. After that, the pot was opened in the atmosphere of argon gas and a co-milled product was taken out.

**Table 3**

| Element | Fe | Mo | Al | Cu |
|---|---|---|---|---|
| Ferromolybdenum material (mass%) | 38.0 | 60.0 | 0.3 | 1.7 |

The measurement result of the co-milled product in terms of X-ray diffraction is shown as the second chart from the bottom in Fig. 2 (abscissa: angle of diffraction, ordinate: diffracted intensity). For comparison, the measurement result of a simple mixture of ferromolybdenum and graphite in the same proportions as in the material charged into the pot is also shown at the bottom part of Fig. 2. Fig. 2 shows that a solid phase reaction proceeded by the co-milling, so that the structure of the graphite disappeared.

In a silica-glass tube furnace, 3 g of the co-milied product (sample) was held at 800°C for 2 hours while hydrogen gas was fed to the furnace. After that, the heater was turned off and the hydrogen gas was continuously fed until the sample was at 30°C or less. The measurement result of this sample in terms of X-ray diffraction is shown as the third chart from the bottom in Fig. 2. The chart shows generation of MO₂C Fe₃MO₃C, and Fe.

The second chart from the bottom does not show peaks of carbides because the co-milled product was amorphous. In contrast, the third chart from the bottom shows peaks of carbides because the co-milled product was heated at the hydrogen anneal temperature of 800°C and, as a result, it was well crystellized. Thus, it is obvious that the co-milling caused the generation of the carbides.

Further, 0.5 g of the sample that had been subjected to the hydrogen anneal was put into 100 ml of 0.1 N hydrochloric acid, stirred at 50°C for 2 hours and filtered. The filtration residue was washed with pure water and dried. The measurement result of this sample in terms of X-ray diffraction is shown as the uppermost chart in Fig. 2. This chart shows that Fe was separated and removed and Mo₂C and Fe₃Mo₃C remained.

The compositions of Fe, Mo, and C in the co-milled product and in the filtration residue obtained after the hydrochloric acid leaching are shown in Table 4.

**Table 4**

| Element | Fe | Mo | C | C/Mo |
|---|---|---|---|---|
| Co-milled product (mass%) | 34.3 | 54.3 | 9.8 | 1.44 |
| Filtration residue obtained after hydrochloric acid leaching (mass%) | 15.9 | 79.0 | 3.8 | 0.38 |

| | | | | |
|---|---|---|---|---|
| C/Mo is represented by a molar ratio. | | | | |

### [EXAMPLE 3]

A stainless steel pot (diameter: 4 cm, height: 4 cm) of a planetary mill (manufactured by Fritsch GmbH, Germany) was charged with 4.8 g of ferrotungsten that had a composition shown in Table 5 and was grounded in advance such that the total amount of the ferrotungsten passed through a sieve opening of 1 mm; and 0.3 g of graphite having an average particle size of 0.21 mm. A molar ratio C/W is calculated as 1.4 from the content of W.

**Table 5**

| Element | Fe | W | Si | Mn | Mo | Al |
|---|---|---|---|---|---|---|
| Ferrotungsten material (mass%) | 28.3 | 70.2 | 0.3 | 0.63 | 0.32 | 0.25 |

Seven stainless steel balls (diameter: 15 mm) were put into the pot. After that, the atmosphere of a glove box housing the whole planetary mill was replaced with argon gas. Next, co-milling was conducted at the number of revolutions of 700 rpm for 120 min while argon gas was fed to the glove box at a flow rate of 20 ml/min. The temperature of the pot immediately after the co-milling was 85°C. The pot was allowed to cool naturally to 30°C. After that, the pot was opened in the atmosphere of argon gas and a co-milled product was taken out.

The measurement result of the co-milled product in terms of X-ray diffraction is shown as the second chart from the bottom in Fig. 3 (abscissa: angle of diffraction, ordinate: diffracted intensity). For comparison, the measurement result of a simple mixture of ferrotungsten and graphite in the same proportions as in the material charged into the pot in terms of X-ray diffraction is also shown at the bottom part of Fig. 3. Although accurate identification of the broad peaks is difficult, Fig. 3 shows that a solid phase reaction proceeded by the co-milling, so that the structures of the ferrotungsten and the graphite disappeared and at least Fe₃W₃C was generated.

In a silica-glass tube furnace, 3 g of the co-milled product (sample) was held at 800°C for 2 hours while hydrogen gas was fed to the furnace. After that, the heater was turned off and the hydrogen gas was continuously fed until the sample was at 30°C or less. The measurement result of the sample in terms of X-ray diffraction is shown as the third chart from the bottom in Fig. 3. The chart shows generation of Fe₃W₃C, Fe₆W₆C, and WC. The chart also shows generation of Fe.

Further, 0.5 g of the sample that had been subjected to the hydrogen anneal was put into 100 ml of 0.1 N hydrochloric acid, stirred at 50°C for 2 hours and filtered. The filtration residue was washed with pure water and dried. The measurement result of this sample in terms of X-ray diffraction is shown as the uppermost chart in Fig. 3. This chart shows that, as a result of the hydrochloric acid leaching, Fe was separated and removed, the structure of Fe₆W₆C disappeared, and Fe₃W₃C and WC remained.

The compositions of Fe, W, and C in the co-milled product and in the filtration residue obtained after the hydrochloric acid leaching are shown in Table 6.

**Table 6**

| Element | Fe | W | C | C/W |
|---|---|---|---|---|
| Co-milled product (masts%) | 26.5 | 65.9 | 6.0 | 1.39 |
| Filtration residue obtained after hydrochloric acid leaching (mass%) | 6.1 | 87.7 | 4.9 | 0.86 |

| | | | | |
|---|---|---|---|---|
| C/W is represented by a molar ratio. | | | | |

### [COMPARATIVE EXAMPLE 1]

Ferroniobium and graphite were co-milled with the same equipment and materials by the same method under the same conditions as in EXAMPLE 1. In a silica-glass tube furnace, 3 g of the thus-obtained co-milled product (sample) was held at 650°C for 2 hours while hydrogen gas was fed to the furnace. After that, the heater was turned off and the hydrogen gas was continuously fed until the sample was at 30°C or less. After that, 0.5 g of the sample was put into 100 ml of 0.1 N hydrochloric acid, stirred at 50°C for 2 hours and filtered. The filtration residue was washed with pure water and dried. The compositions of Fe, Nb, and C in the co-milled product and in the filtration residue obtained after the hydrochloric acid leaching are shown in Table 7.

Table 7 shows that C/Nb of the filtration residue was 1.01 while several percents of Fe remained. This shows that cementite generated in the co-milling step was not completely converted into metal iron due to the insufficient hydrogen anneal temperature and could not be removed by the hydrochloric acid leaching.

**Table 7**

| Element | Fe | Nb | C | C/Nb |
|---|---|---|---|---|
| Co-milled product (mass%) | 29.76 | 59.31 | 9.74 | 1.27 |
| Filtration residue obtained after hydrochloric acid leaching (mass%) | 3.54 | 80.32 | 10.46 | 1.01 |

| | | | | |
|---|---|---|---|---|
| C/Nb is represented by a molar ratio. | | | | |

### [COMPARATIVE EXAMPLE 2]

Ferroniobium and graphite were co-milled with the same equipment and materials by the same method under the same conditions as in EXAMPLE 1. In a silica-glass tube furnace, 3 g of the thus-obtained co-milled product (sample) was held at 1000°C for 2 hours while hydrogen gas was fed to the furnace. After that, the heater was turned off and the hydrogen gas was continuously fed until the sample was at 30°C or less. Then, 0.5 g of the sample was put into 100 ml of 0.1 N hydrochloric acid, stirred at 50°C for 2 hours and filtered. The filtration residue was washed with pure water and dried. The compositions of Fe, Nb, and C in the co-milled product and in the filtration residue obtained after the hydrochloric acid leaching are shown in Table 8.

Fe that was present after the co-milling substantially disappeared by the hydrogen anneal and the hydrochloric acid leaching. However, the content of C was larger than that in EXAMPLE I and the molar ratio Nb/C did not decrease from that of the co-milled product. This is presumably because, in the high temperature of 1000°C, cementite was decomposed into metal iron and granular carbon, which does not dissolve in hydrochloric acid. Hence hydrogen reduction of the cementite could not take place easily.

**Table 8**

| Element | Fe | Nb | C | C/Nb |
|---|---|---|---|---|
| Co-milled product (mass%) | 30.81 | 58.61 | 9.80 | 1.29 |
| Filtration residue obtained after hydrochloric acid leaching (mass%) | 0.02 | 82.65 | 13.50 | 1.26 |

| | | | | |
|---|---|---|---|---|
| C/Nb is represented by a molar ratio. | | | | |

### Industrial Applicability

Carbides of transition metals and/or composite carbides of transition metals and iron obtained according to the present invention have high purity and can be produced at an extremely low cost. Therefore, the present invention is extremely advantageous in industrial fields.

## Claims

1. A method for producing a carbide of a Group IVA, VA, or VIA transition metal in the periodic table and/or a composite carbide of the transition metal and iron, the method comprising the step of co-milling a ferroalloy containing a Group IVA, VA, or VIA transition metal in the periodic table and incidental impurities and a carbon material mainly composed of carbon in a vacuum or an atmosphere of an inert gas to effect a solid phase reaction between the ferroalloy and the carbon material.

2. A method for producing a carbide of a Group IVA, VA, or VIA transition metal in the periodic table and/or a composite carbide of the transition metal and iron, the method comprising the steps of: co-milling a ferroalloy containing a Group IVA, VA, or VIA transition metal in the periodic table and incidental impurities and a carbon material mainly composed of carbon in a vacuum or an atmosphere of an inert gas to effect a solid phase reaction between the ferroalloy and the carbon material; reducing cementite into metal iron with a reducing gas, the cementite being generated as a by-product in the solid phase reaction caused by the co-milling; and separating and removing the resultant metal iron from a product of the solid phase reaction by dissolving the metal iron in an acid.

3. The method for producing a carbide of the transition metal and/or a composite carbide of the transition metal and iron according to Claim 1 or 2, wherein the transition metal is vanadium, niobium, tantalum, chromium, molybdenum, or tungsten.

4. The method for producing a carbide of the transition metal and/or a composite carbide of the transition metal and iron according to any one of Claims 1 to 3, wherein the carbon material is graphite, activated carbon, or coke.

5. The method for producing a carbide of the transition metal and/or a composite carbide of the transition metal and iron according to any one of Claims 1 to 4, wherein a molar ratio of the carbon material to the ferroalloy is 0.16 to 1.5 in the co-milling.

6. The method for producing a carbide of the transition metal and/or a composite carbide of the transition metal and iron according to any one of Claims 1 to 5, wherein the co-milling is conducted with a grinding machine that provides an acceleration of 5 G or more.

7. The method for producing a carbide of the transition metal and/or a composite carbide of the transition metal and iron according to any one of Claims 2 to 6, wherein hydrogen gas is used as the reducing gas and the cementite is reduced into the metal iron at a temperature of 700°C to 900°C.
